# FASCICULE DE BREVET EUROPEEN

(11) **EP 2 804 016 B1**
(45) Date de publication et mention de la délivrance du brevet: **27.03.2019**
(21) Numéro de dépôt: 14168147.8
(22) Date de dépôt: 13.05.2014
(51) Int. Cl.: G01S 19/28, G01S 19/20, G01S 19/22

(54) **Procédé amélioré de détermination de la position et/ou de la vitesse d'un véhicule guidé ; système associé**
Verbessertes Verfahren zur Bestimmung der Position und/oder Geschwindigkeit eines gesteuerten Fahrzeugs, sowie entsprechendes System
Improved method for determining the position and/or the speed of a guided vehicle; related system

(30) Priorité: 13.05.2013 FR 1354268
(43) Date de publication de la demande: 19.11.2014
(73) Titulaire: ALSTOM Transport Technologies, 93400 Saint-Ouen (FR)
(72) Inventeur: Andre, Brice, B-6010 Couillet (BE); Bortolotto, Mauro, B-6200 Chatelineau (BE)
(74) Mandataire: Lavoix

(56) Documents cités:
- FR-A1- 2 956 215
- US-A- 5 808 581
- US-A1- 2010 283 670

## Description

L'invention a pour domaine celui des procédés et des systèmes de détermination de l'état cinématique instantané d'un véhicule guidé.

Dans la présente demande, par véhicule guidé, on entend tout type de véhicules contraints à circuler le long d'une voie, tels que par exemple, un train, un tramway, un métro, etc.

Par état cinématique, on entend soit la position du véhicule, soit la vitesse du véhicule, soit les deux.

Le document EP 1 712 930 B1 divulgue un procédé de détermination de la vitesse instantanée d'un train mis en oeuvre par un système embarqué.

Ce système exécute un algorithme de calcul de la valeur instantanée de la vitesse du train à partir des six paires possibles de signaux de localisation émis par un groupe de quatre satellites appartenant à une constellation de satellites de localisation.

Dans ce procédé de l'art antérieur, pour que la mesure de la grandeur mesurée présente un niveau de confiance élevé, un procédé préliminaire assure la sélection des quatre satellites dont les signaux seront utilisés par l'algorithme de calcul. Cette sélection s'effectue parmi l'ensemble des satellites de la constellation qui sont visibles par le système embarqué à l'instant courant.

Le procédé de sélection sert à mettre de côté un satellite visible dont le signal est incorrect ou altéré lors de sa réception. C'est par exemple le cas lorsque ce signal est réfléchi par l'environnement avant d'être reçu. Une telle perturbation du signal est dénommée «phénomène de chemins alternatifs» («Alternative Path» en anglais). En effet, lorsqu'un signal ainsi perturbé est utilisé par l'algorithme de calcul, la valeur instantanée de la vitesse calculée est erronée.

Pour détecter qu'un signal est perturbé, le système décrit dans le document EP 1 712 930 B1 comporte deux récepteurs distants. Dès qu'une différence apparaît entre les signaux provenant d'un même satellite mais reçus par chacun des deux récepteurs, le satellite en question est exclu de la liste des satellites utilisables dans la détermination de la vitesse du train. Cette exclusion est maintenue pendant un temps prédéterminé, correspondant à une estimation du temps nécessaire au train pour traverser une zone de perturbations.

Quatre satellites de la liste des satellites utilisables sont ensuite choisis au hasard pour l'exécution de l'algorithme de calcul.

De cette manière, on s'assure que les quatre signaux de localisation utilisés par l'algorithme de calcul ne sont pas perturbés et que l'exécution de l'algorithme de calcul va conduire à l'obtention d'une mesure de la grandeur cinématique recherchée.

Le document FR 2 956 215 A1 divulgue un procédé de sélection des satellites utilisables pour la détermination de l'état cinématique d'un véhicule automobile, du type comportant les étapes consistant à :
- calculer une valeur instantanée mesurée d'une grandeur parmi un coefficient Doppler et une pseudodistance, à partir de signaux reçus d'une pluralité de satellites d'une constellation de satellites de localisation ;
- déterminer une valeur instantanée estimée de ladite grandeur ;
- comparer les valeurs instantanées mesurée et estimée ; et, en cas de différence importante,
- identifier au moins un satellite dont le signal est à l'origine de la valeur instantanée mesurée erronée et supprimer ledit au moins un satellite de la liste des satellites utilisables.

Dans le document FR 2 956 215 A, l'étape de détermination de la valeur instantanée estimée est fondée sur un modèle du comportement dynamique du véhicule automobile. Ce modèle utilise, en tant que données d'entrée, une pluralité de données mesurées délivrées par différents capteurs cinématiques équipant ledit véhicule automobile. En particulier, dans un mode de réalisation privilégié, le véhicule automobile embarque une centrale inertielle propre à délivrer des valeurs instantanée de la vitesse et de la position du véhicule automobile. Puis, à partir de cet état instantané estimé du véhicule automobile, un algorithme calcule la valeur instantanée estimée de la grandeur d'intérêt, coefficient Doppler et/ou pseudodistance.

L'invention a pour but de proposer un procédé de sélection alternatif, particulièrement bien adapté au cas particulier des véhicules guidés.

A cette fin, l'invention a pour objet un procédé de sélection d'un ensemble de satellites visibles utilisables parmi un ensemble de satellites visibles d'une constellation de satellites de localisation, pour déterminer un état cinématique instantané d'un véhicule guidé, du type comportant les étapes consistant à, pour chaque satellite de l'ensemble de satellites visibles :
- calculer une valeur instantanée mesurée d'une grandeur parmi un coefficient Doppler et une pseudodistance, à partir du signal reçu dudit satellite visible ;
- déterminer une valeur instantanée estimée de ladite grandeur ;
- comparer les valeurs instantanées mesurée et estimée selon un critère, et en cas de non respect dudit critère ;
- supprimer ledit satellite d'un ensemble de satellites visibles utilisables,
caractérisé en ce que l'étape de détermination d'une valeur estimée de la grandeur met en oeuvre un modèle dynamique du véhicule guidé qui utilise uniquement un état cinématique du véhicule guidé déterminé à un instant passé pour calculer un état cinématique instantané estimé.

Suivant des modes particuliers de réalisation, le procédé comporte une ou plusieurs des caractéristiques suivantes, prises isolément ou suivant toutes les combinaisons techniquement possibles :
- le modèle dynamique du véhicule guidé utilise une cartographie de la voie sur laquelle se déplace le véhicule guidé ;
- l'étape de détermination d'une valeur estimée de la grandeur utilise une éphéméride permettant d'estimer la position et la vitesse relative d'un satellite de l'ensemble des satellites visibles et du véhicule guidé dans l'état cinématique instantané estimé ;
- l'étape de comparaison comporte une détermination d'un écart entre les valeurs instantanées mesurée et estimée de la grandeur et/ ou une détermination d'une covariance entre les valeurs instantanées mesurée et estimée de la grandeur ;
- le critère consiste à vérifier que l'écart est inférieur à un écart seuil et/ou que la covariance est inférieure à une covariance seuil ;

L'invention a également pour objet un procédé de calcul d'un état cinématique instantané d'un véhicule guidé à partir des signaux émis par un ensemble de satellites d'une constellation de satellites de localisation, caractérisé en ce que le procédé débute par un procédé de sélection conforme au procédé précédent de manière à générer un ensemble de satellites visibles utilisables et en ce que le procédé se poursuit par le calcul de l'état cinématique instantané du véhicule guidé uniquement à partir des signaux émis par les satellites de la liste de satellites visibles utilisables.

L'invention a également pour objet un système de détermination d'une grandeur cinématique instantanée d'un véhicule guidé, embarqué à bord du véhicule, comportant un récepteur des signaux émis par des satellites d'une constellation de satellites de localisation, des moyens de mémorisation et des moyens de calcul, caractérisé en ce qu'il est propre à exécuter les instructions d'un programme d'ordinateur pour la mise en oeuvre d'un procédé de calcul d'un état cinématique instantané conforme au procédé précédent.

L'invention et ses avantages seront mieux compris à la lecture de la description qui va suivre, donnée uniquement à titre d'exemple et faite en se référant aux dessins annexés sur lesquels :
- la figure 1 est une représentation schématique d'un train équipé d'un système embarqué de détermination d'un état cinématique instantané, à partir des signaux émis par une constellation de satellites de localisation ;
- la figure 2 est une représentation sous forme de blocs de la structure du système de la figure 1 ;
- la figure 3 est une représentation sous forme de blocs d'un moyen de sélection d'une liste de satellites visibles utilisables dont est équipé le système de la figure 2 ; et,

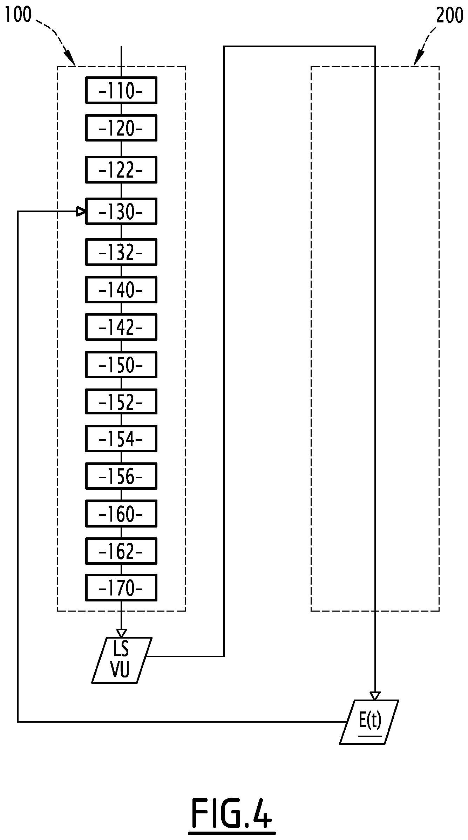

- la figure 4 est une représentation sous forme de blocs du procédé de sélection mis en oeuvre par le moyen de sélection de la figure 3.

Va maintenant être décrit en détail un mode de réalisation du procédé de sélection et d'un système permettant la mise en oeuvre de ce procédé permettant de filtrer les signaux de localisation perturbés.

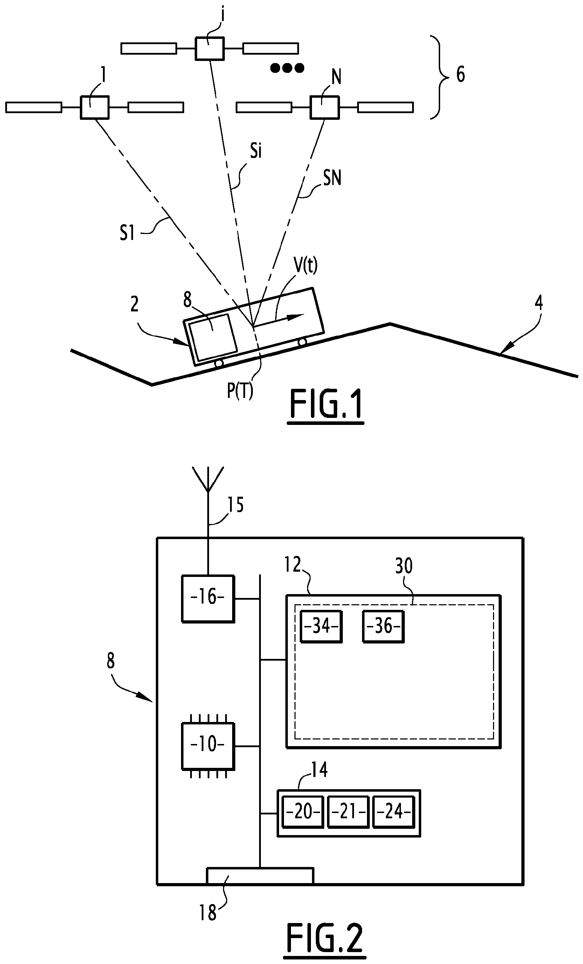

En se référant à la figure 1, un train 2 circule le long d'une voie ferrée 4 dont le tracé est connu.

Pour déterminer un état cinématique instantané E(t), qui comporte la position instantanée P(t) et la vitesse instantanée V(t) du train 2, celui-ci est équipé d'un système 8 embarqué.

Le système 8 est propre à recevoir des signaux de localisation Si émis par différents satellites i appartenant à une même constellation 6 de satellites de localisation.

Comme exemple d'une telle constellation de satellites, on donnera celui de la constellation GPS (pour « *global positioning system* » en anglais) constituée d'une trentaine de satellites NAVSTAR.

En fonction de l'instant courant t et de la position P(t) du train 2 à l'instant courant t, N satellites i sont visibles par le système 8. C'est-à-dire que le système 8 du train 2 reçoit le signal de localisation Si émis par chacun de ces N satellites i.

Comme cela est représenté schématiquement sur la figure 2, le système 8 est un calculateur qui comporte des moyens de calcul, tels qu'un processeur 10, des moyens de mémorisation, tels qu'une mémoire vive 12 et une base de données 14, un module de réception 16 des signaux émis par des satellites de la constellation 6 (le module 16 étant connecté à une antenne 15), et une interface d'entrée-sortie 18, permettant l'échange de données entre le système 8 et d'autres systèmes embarqués à bord du train 2.

Les différents éléments constitutifs du système 8 sont connectés les uns aux autres au moyen d'un bus de communication interne.

La mémoire 12 stocke les instructions de différents programmes d'ordinateur, qui sont propres à être exécutées par le processeur 10. En particulier, la mémoire 12 stocke les instructions d'un programme pour la mise en oeuvre du procédé de sélection des satellites visibles.

La base de données 14 stocke un almanach 20. Un almanach 20 est mis à jour périodiquement par la constellation 6. Il possède une durée de validité t0 entre un premier instant t1 et un second instant t2. L'almanach 20 est transmis au sol en tant que partie de la charge utile de chacun des signaux de localisation Si émis par les satellites i.

Le module de réception 16 du système 8 est propre à identifier la partie d'almanach 20 dans un signal reçu et à l'enregistrer dans la base de données 14. L'almanach 20 permet au système 8 de déterminer l'ensemble des satellites de la constellation 6 qui sont potentiellement visibles entre des instants t1 et t2 à partir de n'importe quel point à la surface de la terre.

La base de données 14 stocke également, pour chaque satellite visible, une éphéméride 21. Une éphéméride 21 est mise à jour périodiquement par la constellation 6. Elle possède une durée de validité t3 entre un premier instant de validité t4 et un second instant de validité t5. L'éphéméride 21 est transmise au sol en tant que partie de la charge utile du signal de localisation Si transmis par le satellite i correspondant.

Le module de réception 16 du système 8 est propre à identifier la partie d'éphéméride 21 dans un signal reçu et à l'enregistrer dans la base de données 14. L'éphéméride 21 permet au système 8 de déterminer une position, une vitesse et des erreurs de temps du satellite correspondant.

La base de données 14 stocke une cartographie 24 de la voie 4 le long de laquelle circule le train 2.

La mémoire 12 comporte les instructions d'un programme 30 de détermination de l'état cinématique instantané E(t) du train 2 à l'instant courant t.

Le programme 30 comporte un moyen de sélection 34 propre à délivrer une liste des satellites visibles utilisables LSVU et un moyen de calcul 36 de l'état cinématique instantané E(t) à partir de la liste des satellites visibles utilisable LSVU.

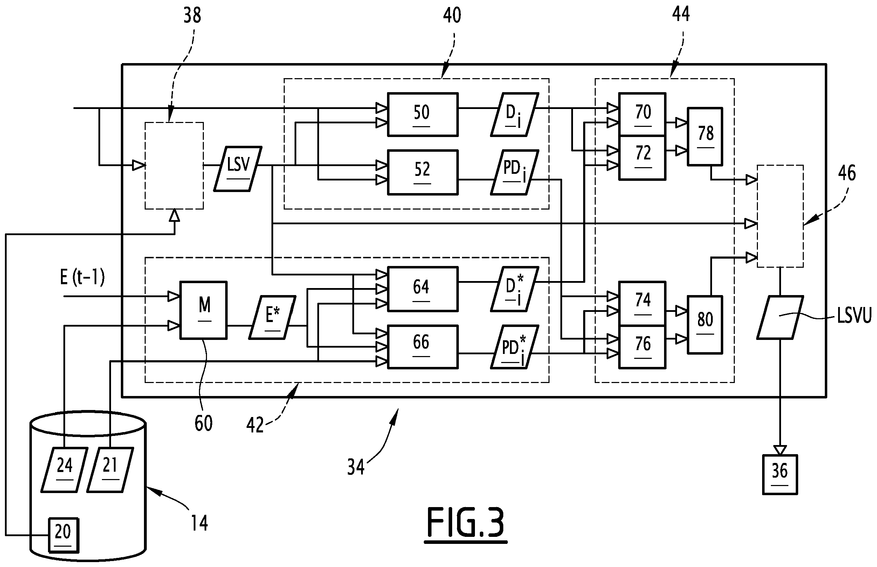

Comme représenté en détail à la figure 3, le moyen de sélection 34 comporte un module 38 de mise à jour d'une liste de satellites visibles LSV, un module de mesure 40 d'au moins une grandeur, un module d'estimation 42 de ladite au moins une grandeur, un module de comparaison 44, et un module de mise à jour d'une liste de satellites visibles utilisables LSVU

Le module 38 de mise à jour d'une liste de satellites visibles LSV est propre à maintenir à jour une liste instantanée indiquant l'identifiant i de chacun des satellites visibles, tels qu'indiqués par le moyen 16.

Le module de mesure 40 comporte un sous-module de calcul 50 propre à calculer, pour chaque satellite i de la liste LSV, une valeur instantanée mesurée Di du coefficient Doppler, à partir du signal Si émis par ce satellite.

Le module de mesure 40 comporte un sous-module 52 propre à calculer, pour chaque satellite i de la liste LSV, une valeur instantanée mesurée PDi de la pseudodistance, à partir du signal Si émis par ce satellite.

Le moyen d'estimation 42 comporte un sous-module 60 d'estimation de l'état cinématique courant. Le sous-module 60 est propre à prendre en entrée l'état cinématique E(t-1) du train 2 déterminé à l'instant précédent t-1, généré en sortie du moyen de calcul 36 pour l'instant précédent t-1.

Le sous-module 60 est propre, à partir de la cartographie 24 contenu dans la base de données 14 et en fonction de l'état cinématique à l'instant précédent E(t-1), d'extraire des informations relatives à une portion de voie sur laquelle le train circule entre t-1 et t.

Le sous-module 60, qui comporte un modèle dynamique M du comportement du train 2, est propre, à partir de l'état cinématique E(t-1) et des informations relatives à la portion de voie sur laquelle circule le train 2, de déterminer un état cinématique estimé E*(t) du train à l'instant courant t.

Dans un mode de réalisation particulier, le modèle dynamique M du comportement du train 2 utilisé par le sous-module 60 considère que le train circule à accélération constante. L'estimation du nouvel état cinématique E(t) du train est donc réalisé en déterminant, grâce à la cartographie 24, la nouvelle position du train, en extrapolant le déplacement du train à accélération constante depuis l'état cinématique précédent E(t-1). En tenant compte des variations de vitesse lentes d'un véhicule ferroviaires, ce modèle dynamique très rudimentaire donne de bonnes estimations du comportement cinématique réel du train sur les intervalles de temps considérés.

Le moyen d'estimation 60 comporte un sous-module 64 propre à calculer, pour chaque satellite i de la liste LSV, une valeur instantanée estimée D*i du coefficient Doppler. Pour ce faire, le sous-module 64 considère les positions instantanées des satellites Si, indiquées dans l'éphéméride 21 stocké dans la base de données 14, et la position estimée P*(t) indiquée dans l'état cinématique estimé E*(t) du train à l'instant courant t.

Le moyen d'estimation 60 comporte un sous-module 66 propre à calculer, pour chaque satellite i de la liste LSV, une valeur instantanée estimée PD*i de la pseudodistance. Pour ce faire, le sous-module 66 considère les positions instantanées des satellites Si, indiquées dans l'éphéméride 21 stocké dans la base de données 14, et la position estimée P*(t) indiquée dans l'état cinématique estimé E*(t) du train à l'instant courant t.

Le module de comparaison 44 comporte un sous-module 70 de détermination d'un écart ΔDi entre les valeurs instantanées mesurée et estimée Di et D*i du coefficient Doppler pour le stellite i.

Le module de comparaison 44 comporte un sous-module 72 de détermination d'une covariance CovD entre les valeurs instantanées mesurée et estimée Di et D*i du coefficient Doppler pour le stellite i.

Le module de comparaison 44 comporte un sous-module 74 de détermination d'un écart ΔPD entre les valeurs instantanées mesurée et estimée PDi et PD*i de la pseudodistance pour le stellite i.

Le module de comparaison comporte un sous-module 76 de détermination d'une covariance CovPD entre les valeurs instantanées mesurée et estimée PDi et PD*i de la pseudodistance pour le stellite i.

Le moyen de comparaison comporte un sous-module 78 de vérification de la valeur mesurée du coefficient Doppler. Le sous-module 78 est propre à comparer la valeur ΔDi à une valeur seuil ΔD0 et la valeur CovDi à une valeur seuil CovD0. Lorsque ΔDi est supérieure à ΔD0 et CovDi est supérieure à CovD0, le sous-module 76 est propre à passer l'identifiant i au module 46 de mise à jour de la liste des satellites visibles utilisables LSVU.

Le moyen de comparaison comporte un sous-module 80 de vérification de la valeur mesurée de la pseudodistance. Le sous-module 80 est propre à comparer la valeur ΔPDi à une valeur seuil ΔPD0 et la valeur CovPDi à une valeur seuil CovPD0. Lorsque ΔPDi est supérieure à ΔPD0 et CovPDi est supérieure à CovPD0, le sous-module 78 est propre à passer l'identifiant i au module 46 de mise à jour de la liste des satellites visibles utilisables LSVU

Le module 46 est propre à générer une liste des satellites visibles utilisables LSVU. Pour ce faire, le module 46 est propre à initialiser la liste des satellites visibles utilisables à partir de la liste des satellites visibles LSV en sortie du module 48 à chaque fois que cette dernière est modifiée. Le module 46 est ensuite propre à supprimer de la liste ainsi initialisée, l'identifiant i d'un satellite qui lui est communiqué par le sous-module 78 ou le sous-module 80.

Le moyen de calcul 36 prend en entrée la liste LSVU générée en sortie du moyen de sélection 44 pour calculer l'état cinématique instantanée E(t) du train 2 à partir uniquement des signaux provenant des satellites mentionnés dans la liste LSVU.

Le procédé de détermination de l'état cinématique instantané E(t) du train 2 résultant de l'exécution, par le système 8, du programme 30 va maintenant être présenté.

L'exécution du programme 30 débute par l'exécution 100 du moyen de sélection 34 pour délivrer une liste de satellites visibles utilisables LSVU.

A l'étape 110, l'exécution du moyen de sélection 34 débute par l'exécution du module 38. A partir des identifiants i des satellites visibles indiqués par le moyen 16, le module 38 génère une liste des satellites visibles à l'instant courant LSV. Dès qu'une liste LSV est générée, le module 46 initialise une liste des satellites visibles utilisables LSVU en recopiant la liste des satellites visibles LSV.

Puis, à l'étape 120, le sous-module de calcul 50 est exécuté de manière à calculer, pour chaque satellite i de la liste LSV, une valeur instantanée mesurée Di du coefficient Doppler, à partir du signal Si émis par ce satellite. A l'étape 122, le sous-module 52 est exécuté pour calculer, pour chaque satellite i de la liste LSV, une valeur instantanée mesurée PDi de la pseudodistance, à partir du signal Si émis par ce satellite.

Le sous-module 60 est ensuite exécuté pour générer un état cinématique estimé instantané E*(t) du train 2.

A l'étape 130, le sous-module 60 prend en entrée l'état cinématique E(t-1) du train déterminé à l'instant précédent t-1. Le sous-module 60 accède à la base de données 14 pour lire la cartographie 24. Puis, en fonction de ces deux entrées, le sous-module 60 détermine des informations relatives à la portion de la voie 4 sur laquelle circule le train 2 entre t-1 et t.

A l'étape 132, le modèle dynamique M du sous-module 60 est utilisé pour déterminer un état cinématique estimé E*(t) du train à l'instant courant t, à partir de l'état cinématique E(t-1) et les informations relatives à la portion de la voie sur laquelle circule le train 2.

A l'étape 140, l'exécution du moyen d'estimation 60 se poursuit par l'exécution du sous-module 64 afin de calculer, pour chaque satellite i de la liste LSV, une valeur instantanée estimée D*i du coefficient Doppler. Pour ce faire, la position et la vitesse instantanées du satellite i, calculées grâce aux données contenues dans l'éphéméride 21 stockée dans la base de données 14, et la position et la vitesse instantanées estimées du train 2, P*(t) et V*(t), contenues dans l'état cinématique estimé E*(t), sont utilisées pour déterminer une position et une vitesse relatives entre le satellite i et le train 2 afin d'estimer les signaux S*i reçu et d'en déduire la valeur D*i.

Puis, à l'étape 142 , le sous-module 66 est exécuté afin de calculer, pour chaque satellite i de la liste LSV, une valeur instantanée estimée PD*i de la pseudodistance. Pour ce faire, la position et la vitesse instantanées du satellite i, calculées depuis les données contenues dans l'éphéméride 21 stocké dans la base de données 14, et la position et la vitesse instantanées estimées du train 2, P*(t) et V*(t), contenues dans l'état cinématique estimé E*(t), sont utilisées pour déterminer une position et une vitesse relatives entre le satellite i et le train 2 afin d'estimer les signaux S*i reçu et d'en déduire la valeur PD*i.

Puis, à l'étape 150, correspondant à l'exécution du sous-module 70 du module de comparaison 44, l'écart ΔDi est calculé par différence entre les valeurs instantanées mesurée et estimée, Di et D*i, pour le stellite i.

A l'étape 152, correspondant à l'exécution du sous-module 72, une covariance CovDi est calculée entre les valeurs instantanées mesurée et estimée Di et D*i du coefficient Doppler, pour le stellite i.

A l'étape 154, correspondant à l'exécution du sous-module 74, un écart ΔPDi est calculé par différence entre les valeurs instantanées mesurée et estimée, PDi et PD*i, pour le stellite i.

A l'étape 156, correspondant à l'exécution du sous-module 76, une covariance CovPDi entre les valeurs instantanées mesurée et estimée, PDi et PD*i, pour le stellite i.

Dans l'étape 160 de comparaison proprement dite, l'exécution du sous-module 78 permet de vérifier que la valeur ΔDi est inférieure à un écart seuil ΔD0 et que la valeur CovDi est inférieure à une valeur seuil CovD0. Dans la négative l'identifiant i est transmis au module 46.

Dans l'étape 162, de manière similaire, l'exécution du sous-module 80 permet de vérifier que la valeur ΔPDi est inférieure à un écart seuil ΔPD0 et que la valeur CovPDi est inférieure à une valeur seuil CovPD0. Dans la négative l'identifiant i est transmis au module 46.

Enfin, à l'étape 170 de mise à jour de la liste des satellites visibles utilisables LSVU, le module 46 supprime, de la liste LSVU initialisée à partir de la liste LSV, l'identifiant i d'un satellite qui lui est transmis à l'issue de l'étape 160 ou de l'étape 162.

Le moyen de calcul 36 prend en entrée la liste LSVU générée en sortie du moyen de sélection 34 pour calculer l'état cinématique instantanée E(t) du train 2 à partir uniquement des signaux provenant des satellites mentionnés dans la liste LSVU.

Une fois la liste LSVU générée, l'étape 200 de calcul de l'état cinématique instantané courant E(t) est effectuée uniquement à partir des signaux des satellites indiqués dans la liste LSVU

Le procédé met avantageusement à profit le calcul du coefficient Doppler ou de la pseudodistance, qui sont des grandeurs qui, en cas de perturbation du signal de localisation, fluctuent avec une amplitude importante. Ainsi, si l'amplitude d'une valeur mesurée de l'une ou l'autre de ces grandeurs est importante et présente une grande variabilité dans le temps, cela permet de penser que le signal de localisation correspondant est perturbé. Le satellite émetteur de ce signal est alors retiré de la liste des satellites visibles utilisables pour le calcul ultérieur de l'état cinématique du véhicule.

Avantageusement, le procédé sélection est effectué très en amont de manière à détecter la perturbation d'un signal de localisation très rapidement et éviter la prise en compte de ce signal perturbé dans le calcul de l'état cinématique du véhicule guidé, ce qui peut avoir des conséquences négatives importantes.

## Revendications

1. Procédé de sélection d'un ensemble de satellites visibles utilisables (LSVU) parmi un ensemble de satellites visibles (LSV) d'une constellation (6) de satellites de localisation, pour déterminer un état cinématique à l'instant courant (E(t)) d'un véhicule guidé (2), contraint à circuler le long d'une voie, tel que par exemple un train, un tramway, un métro, le procédé comportant les étapes consistant à, pour chaque satellite (i) de l'ensemble de satellites visibles :
- calculer une valeur instantanée mesurée (Di, PDi) d'une grandeur parmi un coefficient Doppler et une pseudodistance, à partir du signal reçu dudit satellite ;
- déterminer une valeur instantanée estimée (D*i, PD*i) de ladite grandeur, à partir de la position instantanée du satellite indiquée dans une éphéméride (21) et de la positon estimée (P*(t)) indiquée dans un état cinématique estimé à l'instant courant (E*(t)) du véhicule guidé ;
- comparer les valeurs instantanées mesurée et estimée selon un critère, et en cas de non respect dudit critère ;
- supprimer ledit satellite d'un ensemble de satellites visibles utilisables, **caractérisé en ce que** l'étape de détermination d'une valeur instantanée estimée de ladite grandeur comporte les sous-étapes suivantes consistant à :
- extraire des informations relatives à une portion de voie sur laquelle le train circule entre un instant précédent (t-1) et l'instant courant (t) à partir d'une cartographie de la voie et en fonction d'un état cinématique du véhicule guidé déterminé à l'instant précédent (E(t-1)) ;
- déterminer l'état cinématique estimé à l'instant courant (E*(t)) en mettant en oeuvre un modèle dynamique (M) du véhicule guidé, qui utilise uniquement :
∘ l'état cinématique du véhicule guidé déterminé à l'instant précédent (E(t-1)) et,
∘ les informations relatives à la portion de voie sur laquelle se déplace ledit véhicule guidé.

2. Procédé selon la revendication 1, dans lequel l'éphéméride (21) permet d'estimer la position et la vitesse relative d'un satellite de l'ensemble des satellites visibles et du véhicule guidé dans l'état cinématique estimé à l'instant courant (E*(t)).

3. Procédé selon l'une quelconque des revendications précédentes, dans lequel l'étape de comparaison comporte une détermination d'un écart (ΔDi, ΔPDi) entre les valeurs instantanées mesurée et estimée de ladite grandeur et/ou une détermination d'une covariance (CovDi, CovPDi) entre les valeurs instantanées mesurée et estimée de ladite grandeur.

4. Procédé selon la revendication 3, dans lequel ledit critère consiste à vérifier que ledit écart est inférieur à un écart seuil et/ou que ladite covariance est inférieure à une covariance seuil.

5. Procédé de calcul d'un état cinématique à un instant courant (E(t)) d'un véhicule guidé (2), contraint à circuler le long d'une voie, tel que par exemple un train, un tramway, un métro, à partir des signaux (Si) émis par un ensemble de satellites d'une constellation (6) de satellites de localisation, **caractérisé en ce que** le procédé débute par un procédé de sélection conforme au procédé selon l'une quelconque des revendications 1 à 4 de manière à générer un ensemble de satellites visibles utilisables (LSVU) et **en ce que** le procédé se poursuit par le calcul de l'état cinématique à l'instant courant (E(t)) du véhicule guidé uniquement à partir des signaux (Si) émis par les satellites (i) de ladite liste de satellites visibles utilisables (LSVU).

6. Système (8) de détermination d'un état cinématique à l'instant courant (E(t)) d'un véhicule guidé (2), contraint à circuler le long d'une voie, tel que par exemple un train, un tramway, un métro, le système étant embarqué à bord dudit véhicule guidé et comportant un récepteur (16) des signaux (Si) émis par des satellites (i) d'une constellation (6) de satellites de localisation, des moyens de mémorisation (12, 14) et des moyens de calcul (10), **caractérisé en ce qu'**il est propre à exécuter les instructions d'un programme d'ordinateur (30) pour la mise en oeuvre d'un procédé de calcul d'un état cinématique à l'instant courant (E(t)) du véhicule guidé conforme à la revendication 5.

## Patentansprüche

1. Verfahren zum Auswählen einer Gesamtheit nutzbarer sichtbare Satelliten (LSVU) aus einer Gesamtheit sichtbarer Satelliten (LSV) einer Lokalisierungs-Satellitenkonstellation (6), um einen kinematischen Zustand zu einem momentanen Zeitpunkt (E(t)) eines geführten Fahrzeugs (2) zu bestimmen, das auf ein Fahren längs eines Weges eingeschränkt ist, etwa ein Zug, eine Straßenbahn oder eine Untergrundbahn, wobei das Verfahren die Schritte umfasst, die für jeden Satelliten (i) der Gesamtheit sichtbarer Satelliten bestehen im:
- Berechnen eines gemessenen momentanen Wertes (Di, PDi) einer Größe aus einem Doppler-Koeffizienten und einem Pseudoabstand anhand eines von dem Satelliten empfangenen Signals;
- Bestimmen eines geschätzten momentanen Wertes (D*i, PD*i) der Größe anhand der momentanen Position des Satelliten, der in einer Ephemeride (21) angegeben wird, und der geschätzten Position (P*(t)), die in einem geschätzten kinematischen Zustand des geführten Fahrzeugs zu dem momentanen Zeitpunkt (E*(t)) angegeben wird;
- Vergleichen des gemessenen und des geschätzten momentanen Wertes gemäß einem Kriterium und, falls das Kriterium nicht erfüllt ist,
- Unterdrücken des Satelliten einer Gesamtheit nutzbarer sichtbarer Satelliten,
**dadurch gekennzeichnet, dass** der Schritt des Bestimmens eines geschätzten momentanen Wertes der Größe die folgenden Unterschritte umfasst, die bestehen im:
- Extrahieren von Informationen bezüglich eines Abschnitts des Wegs, auf dem der Zug zwischen einem vorhergehenden Zeitpunkt (t-1) und dem momentanen Zeitpunkt (t) fährt, anhand einer Kartographie des Weges und als Funktion eines kinematischen Zustands (E(t-1)) des geführten Fahrzeugs, der zu dem vorhergehenden Zeitpunkt bestimmt wird;
- Bestimmen des geschätzten kinematischen Zustands (E*(t)) zum momentanen Zeitpunkt durch Ausführen eines dynamischen Modells (M) des geführten Fahrzeugs, das ausschließlich Folgendes verwendet:
• den kinematischen Zustand des Fahrzeugs (E(t-1)), der zu dem vorhergehenden Zeitpunkt bestimmt wird, und
• die Informationen bezüglich des Wegabschnitts, auf dem sich das geführte Fahrzeug bewegt.

2. Verfahren nach Anspruch 1, wobei die Ephemeride (21) erlaubt, die Position und die Relativgeschwindigkeit eines Satelliten der Gesamtheit sichtbarer Satelliten und des geführten Fahrzeugs in einem zu dem momentanen Zeitpunkt geschätzten kinematischen Zustand (E*(t)) zu schätzen.

3. Verfahren nach einem der vorhergehenden Ansprüche, wobei der Vergleichsschritt eine Bestimmung eines Abstands (ΔDi, ΔPDi) zwischen dem gemessenen und dem geschätzten momentanen Wert der Größe und/oder eine Bestimmung einer Kovarianz (CovDi, CovDPi) zwischen dem gemessenen und dem geschätzten momentanen Wert der Größe umfasst.

4. Verfahren nach Anspruch 3, wobei das Kriterium darin besteht, zu verifizieren, dass der Abstand kleiner als ein Schwellenabstand ist und/oder dass die Kovarianz kleiner als eine Schwellenkovarianz ist.

5. Verfahren zum Berechnen eines kinematische Zustands (E(t)) zu einem momentanen Zeitpunkt eines geführten Fahrzeugs (2), das auf ein Fahren längs eines Weges eingeschränkt ist, etwa ein Zug, eine Straßenbahn oder eine Untergrundbahn, anhand von Signalen (Si), die von einer Gesamtheit von Satelliten einer Lokalisierungs-Satellitenkonstellation (6) ausgesendet werden, **dadurch gekennzeichnet, dass** das Verfahren durch ein Auswahlverfahren gemäß dem Verfahren nach einem der Ansprüche 1 bis 4 beginnt, derart, dass eine Gesamtheit nutzbarer sichtbarer Satelliten (LSVU) erzeugt wird, und dass das Verfahren durch Berechnen des kinematische Zustands (E(t)) des geführten Fahrzeugs ausschließlich anhand der Signale (Si), die von den Satelliten (i) der Liste nutzbarer sichtbarer Satelliten (LSVU) ausgesendet werden, fortgesetzt wird.

6. System (8) zum Bestimmen eines kinematischen Zustands (E(t)) zu einem momentanen Zeitpunkt eines geführten Fahrzeugs (2), das auf ein Fahren längs eines Weges eingeschränkt ist, etwa ein Zug, eine Straßenbahn oder eine Untergrundbahn, wobei das System an Bord des geführten Fahrzeugs aufgenommen ist und einen Empfänger (16) für Signale (Si), die von Satelliten (i) einer Lokalisierungs-Satellitenkonstellation (6) ausgesendet werden, Speichermittel (12, 14) und Rechenmittel (10) enthält, **dadurch gekennzeichnet, dass** es die Befehle eines Computerprogramms (30) für die Ausführung eines Verfahrens zum Berechnen eines kinematischen Zustands (E(t)) des geführten Fahrzeugs zu einem momentanen Zeitpunkt nach Anspruch 5 ausführen kann.

## Claims

1. A method for selecting a set of usable visible satellites (LSVU) from among a set of visible satellites (LSV) of a constellation (6) of localisation satellites, to determine an instantaneous kinematic state (E(t)) of a guided vehicle (2), constrained to move along a track, such as for example a train, a tramway, a metro, the method including the steps consisting, for each satellite (i) of the set of visible satellites, of:
- calculating an measured instantaneous value (Di, PDi) of a quantity from among a Doppler coefficient and a pseudo-range, from the signal received from said visible satellites;
- determining an estimated instantaneous value (D*i, PD*i) of said quantity, from the instantaneous position of the satellite indicated by an ephemeris (21) and the estimated position (P*(t)) indicated in an estimated instantaneous kinematic state (E*(t)) of the guided vehicle;
- comparing the measured and estimated instantaneous values according to a criterion, and in case of noncompliance with said criterion;
- deleting said satellite from a set of usable visible satellites,
**characterised in that** the step for determining an estimated instantaneous value of said quantity comprises the following sub-steps consisting of:
- extracting information pertaining to a section of the track along which the train circulates between a previous moment (t-1) and a current moment from a cartography of the track and according to a kinematic state of the guided vehicle determined at the previous moment (E(t-1));
- determining the estimated instantaneous kinematic state (E*(t)) using a dynamic model (M) of the guided vehicle that uses only :
∘ a kinematic state of the guided vehicle determined at a previous moment (E(t-1)), and
∘ the information pertaining to the section of the track along which said guided vehicle moves.

2. The method according to claim 1, wherein the ephemeris (21) allows to estimate the relative position and speed of a satellite of the set of visible satellites and the guided vehicle in the estimated instantaneous kinematic state (E*(t)).

3. The method according to any one of the preceding claims, wherein the comparison step includes a determination of a deviation (ΔDi, ΔPDi) between the measured and estimated instantaneous values of said quantity and/or a determination of a covariance (CovDi, CovPDi) between the measured and estimated instantaneous values of said quantity.

4. The method according to claim 3, wherein said criterion consists of verifying that the deviation is smaller than a threshold deviation and/or that the covariance is below a threshold covariance.

5. A method for calculating an instantaneous kinematic state (E(t)) of a guided vehicle (2), constrained to move along a track, such as for example a train, a tramway, a metro, from signals (Si) emitted by a set of satellites from a constellation (6) of localisation satellites, **characterised in that** the method begins with a selection method according to the method according to any one of claims 1 to 4 so as to generate a set of usable visible satellites (LSVU) and **in that** the method continues with the calculation of the instantaneous kinematic state of the guided vehicle only from the signals (Si) emitted by the satellites (i) from said list of usable visible satellites (LSVU).

6. A system (8) for determining an instantaneous kinematic quantity (E(t)) of a guided vehicle (2), constrained to move along a track, such as for example a train, a tramway, a metro, the system being on-board said guided vehicle and including a receiver (16) for the signals (Si) emitted by the satellites (i) from a constellation (6) of localisation satellites, storage means (12, 14) and calculation means (10), **characterised in that** it is capable of executing the instructions of a computer program (30) to implement a method for calculating an instantaneous kinematic state (E(t)) according to claim 5.
